# EUROPEAN PATENT APPLICATION

(11) **EP 4 450 803 A1**
(43) Date of publication of application: **23.10.2024**
(21) Application number: 23168954.8
(22) Date of filing: 20.04.2023
(51) Int. Cl.: F03D 9/19, F03D 1/00, F03D 80/80, F03D 13/10, C25B 1/04

(54) **WIND TURBINE WITH A HYDROGEN PRODUCTION SYSTEM**

(71) Applicant: Siemens Gamesa Renewable Energy A/S, 7330 Brande (DK)
(72) Inventor: Soylu, Mahmut Erbil, 4700 Naestved (DK)
(74) Representative: SGRE-Association

(57) **Abstract**

A wind turbine is provided that comprises a nacelle (10) arranged on a wind turbine tower (103) and comprising an electrical power generation system (20), a nacelle housing (11) of the nacelle, wherein the nacelle housing (11) houses at least part of the electrical power generation system (20), and a hydrogen production system (30) including a hydrogen production unit (36). The hydrogen production unit (36) comprises an electrolyzer (31) configured to receive electrical power from the electrical power generation system (20), wherein the hydrogen production unit (36) is mounted to a top of the nacelle (10) outside of the nacelle housing (11).

## Description

### FIELD OF THE INVENTION

The present invention relates to a wind turbine comprising a hydrogen production system and to a method of assembling a respective wind turbine.

### BACKGROUND

The wind turbines of conventional wind farms are generally configured to produce AC electrical power, which is transported using a conventional power grid or using for example high-voltage AC (HVAC) links that can operate at voltages between 100 and 400 kV. An offshore wind farm can for example be connected by a respective HVAC link. Yet the installation of the respective power transmission lines and in particular the costs associated with the cable itself are quite high, especially if the wind farm is located further away from shore.

In order to be capable of storing generated electric power and to provide a different means of distributing generated power, the conversion of the generated power into hydrogen gas, for example by electrolysis, is being considered. A gas-producing facility may for example be placed at or near an onshore wind farm, and generated hydrogen gas can be transported by conventional means, such as pipes, tank trucks, or the like. Hydrogen gas may also be used to produce other gaseous products, such as ammonia or methane. Produced hydrogen gas may be used in hydrogen fuel cells to produce electricity. The transport of hydrogen gas in a pipe system may be less expensive than transporting the electricity directly via respective high-voltage links to a utility grid. The document WO 2021/219182 A1 discloses an alternative power output from a wind turbine. The document in particular suggests the providing of an electrolyzer within a nacelle of the wind turbine. In such a system, less space within the nacelle is left and replacement of the electrolyzer is difficult and time-consuming.

Generally, the hydrogen production facility is provided separate from the wind turbines, it may for example be provided as a separate facility in the onshore wind farm or may be provided on a separate offshore platform for an offshore wind farm. It is desirable to improve the efficiency of such systems and to avoid the high costs associated with transporting generated electrical power over long distances. It is in particular desirable to provide a system suitable for offshore applications.

### SUMMARY

Accordingly, there is a need to mitigate at least some of the drawbacks mentioned above and to improve the way in which energy extracted from the wind can be made available by a wind turbine.

This need is met by the features of the independent claims. The dependent claims describe embodiments of the invention.

According to an embodiment of the invention, a wind turbine is provided that comprises a nacelle arranged on a wind turbine tower and comprising an electrical power generation system; a nacelle housing of the nacelle, wherein the nacelle housing houses at least part of the electrical power generation system; and a hydrogen production system including a hydrogen production unit. The hydrogen production unit comprises an electrolyzer configured to receive electrical power from the electrical power generation system, wherein the hydrogen production unit is mounted to a top of the nacelle outside of the nacelle housing.

By arranging the hydrogen production unit comprising the electrolyzer at the top of the nacelle outside the nacelle housing, the hydrogen production unit and all components arranged within said unit can be easily replaced. In particular, the hydrogen production unit can be replaced from outside the nacelle by using, for example, a crane or a helicopter.

Further, by arranging the part of the power generation system in the nacelle housing and the hydrogen production unit having the electrolyzer at the top of the nacelle outside the nacelle housing, a direct or almost direct electrical connection between the power generation system and the electrolyzer can be provided. The distance over which the electrical power has to be transported is thus reduced significantly. Further, large diameter cables or even busbars may for example be employed that have only relatively low electrical losses, thus improving the efficiency.

As the hydrogen production unit comprising the electrolyzer is arranged at the outer top of the nacelle housing, and the part of the electrical power generation system (in particular a generator and/or power converter) is arranged within the nacelle housing, the electrolyzer and the part of the electrical power generation system are separated from each other, for example be hermetically sealed against each other. Thus, the top surface of the nacelle housing may be configured to restrict or prevent a flow of gas between the nacelle housing and the electrolyzer (it may however include a sealable door or bulkhead). Safety may thereby be improved, since in case of an escape of produced gas, the danger of explosion may be minimized.

Preferably, the hydrogen production unit comprises a frame structure, a housing, or a platform, wherein the one or more components of the hydrogen production unit are mounted on the frame structure, the housing, or the platform.

For example, the frame structure or the housing comprises a closed container or forms a closed container, wherein the one or more components of the hydrogen production unit are arranged in the container. Such container may for example be a standardized freight container, such as a shipping freight container, in particular a sea-freight container or ISO-container. The container may for example be a series 1 freight-container in accordance with ISO668:2013 or comparable standard.

Thus, the hydrogen production unit comprising the frame structure, the housing, or the platform and all the components mounted on the frame structure, in the housing, or on the platform, e.g. in the container, can easily be assembled as a modular unit. For example, the hydrogen production unit can be mounted on the outer top of the nacelle by using a jackup unit, an offshore crane, or a helicopter.

Preferably, the hydrogen production unit is removably mounted to the top of the nacelle. Thus, disassembly and replacement of the hydrogen production unit is facilitated.

The top of the nacelle may comprise an opening and the bottom surface of the hydrogen production unit may comprise an opening, wherein the opening of the hydrogen production unit may be at least partially coincident with the opening at the top of the nacelle when the hydrogen production unit is mounted at the outer top of the nacelle.

Thus, electrolyzer stacks of the electrolyzer may be transported within the wind turbine tower through the opening at the top of the nacelle housing and the opening of the bottom of the hydrogen production unit into the hydrogen production unit.

Further, conduits (pipes, hoses or the like) for supplying e.g. water, cooling fluid and/or hydrogen to the electrolyzer or vice versa can be guided through the openings.

Furthermore, it may be possible to provide a crane extending from the top of the nacelle outside of the nacelle housing to the base of the wind turbine tower. It may thus be easy to transport components from the base into the hydrogen production unit or vice versa.

In case the frame structure or the housing forms a closed container which is arranged at the outer top of the nacelle, the wind turbine may for example comprise an arrangement configured to generate an over-pressure in the container of the electrolyzer and may preferably further comprise one or more vents in the container configured to vent gas present in the container into ambient air outside the container. Accumulation of produced gas and diffusion of produced gas into the nacelle housing may thus be prevented.

The components of the hydrogen production unit which are arranged inside such container are not exposed to the environment, which is particularly beneficial for offshore wind turbines. Further, the container may include an air-conditioning system that adjusts the humidity and/or temperature inside the container, in particular to prevent the exposure of the components of the hydrogen production unit inside the container to the salt-laden humid air of the offshore environment. The electrolyzer may thus benefit from a respective humidity and temperature control.

Preferably, the hydrogen production unit further comprises one or more of the following components: a water tank configured to store water, in particular desalinated and/or demineralized water received from a water treatment unit, and to supply the stored water to the electrolyzer for operating the electrolyzer, an ion exchanger (or plural ion exchangers) configured to filter ions of water before the water being supplied to the electrolyzer, a gas/liquid separator unit configured to receive and separate a gas/liquid output from the electrolyzer (i.e. to separate the received mixture into a gas output and a liquid output), in particular a hydrogen separator configured to receive a hydrogen/water output from the electrolyzer and an oxygen separator configured to receive an oxygen/water output from the electrolyzer, a gas dryer unit configured to dry a hydrogen output from the electrolyzer, a heat exchanger (or plural heat exchangers) configured to remove the heat generated during operation of the hydrogen production unit, a power storage unit configured to store electrical power for operating the hydrogen production unit, a cooling unit configured to cool one or more components of the hydrogen production unit, and a nitrogen generator configured to generate nitrogen gas from the ambient air and to purge one or more components the hydrogen production unit with the generated nitrogen gas. For example two, three, four, five, six, seven or all of the components may be provided.

For example, in addition to the electrolyzer, the hydrogen production unit comprises at least the water tank and the ion exchanger, or the water tank, the ion exchanger and the nitrogen generator. In another example, in addition to the electrolyzer, the hydrogen production unit comprises at least the water tank, the ion exchanger, the heat exchanger, and a cooling unit.

The hydrogen production system may comprise one or more other components which are arranged at a base of the wind turbine tower and/or within the wind turbine tower.

The one or more other components of the hydrogen production system may include at least one or a combination of: a water treatment unit having a desalination unit configured to desalinate seawater and to provide desalinated water to the hydrogen production system (in particular to the electrolyzer or to a water tank of the hydrogen production system) and/or a demineralization unit configured to demineralize water (e.g. seawater) and to provide demineralized water to the hydrogen production unit (B: the electrolyzer or to a water tank), a pump arrangement configured to pump water from the base of the wind turbine tower to the hydrogen production unit (for example to directly to the electrolyzer or alternatively to a water tank of the hydrogen production unit which is configured to supply the stored water to the electrolyzer), a cooling pump arrangement configured to circulate a cooling fluid (e.g. glycol) between the base of the wind turbine tower and the hydrogen production unit (electrolyzer at the top of the nacelle), a compressor unit configured to compress hydrogen gas produced by the hydrogen production unit and in particular by the electrolyzer (e.g. for transporting the gas onshore or into a storage tank on the wind turbine or on a floating vessel), and electrical power and control equipment of said hydrogen production system. The water treatment unit may be configured to filter, to demineralize, and/or sterilize water (prior and/or after desalination).

For example two, three, four, or all of the components may be provided. The water treatment unit may provide filtration, purification, sterilization, UV-treatment, and/or the like, and it may employ active and/or passive filters. A pump arrangement may for example include a pump on a platform at the base of the tower, but may also include a submersible pump configured to be submerged in seawater and to provide seawater to the desalination unit, and/or a pressure pump to boost the pressure at or above the platform, e.g. within the tower, to feed the electrolyzer of the hydrogen production unit. For example, at least the gas/liquid separator unit, the desalination unit, the pump arrangement and the water treatment unit may be provided at the base of the tower, preferably on a platform.

The wind turbine may include a platform arranged at the base of the wind turbine tower. The one or more other components of the hydrogen production system may be arranged on the platform and/or within the wind turbine tower. For example, all of the components of the above-mentioned group may be arranged on the platform. The platform may in particular be an offshore platform that may be supported by the same support structure (e.g. foundation) that supports the wind turbine tower. It may in particular be arranged above sea level, and it may be a so-called service platform.

Preferably, the pump arrangement, and electrical power and control equipment may be arranged on the platform. The components may be provided in respective containers, and the containers may be arranged on the platform. A component may be provided in its own container, two or more components may be provided in the same container, or a component may be distributed across two or more containers. Such containers may for example be standardized freight containers, such as shipping freight containers, in particular a sea-freight container or ISO-container. The container may for example be a series 1 freight-container in accordance with ISO668:2013. The pump arrangement may include a pump at the level of the platform, but may include further pumps, e.g. the above-mentioned submerged pump or a pump higher up within the wind turbine tower.

The containers may be arranged on the platform around the wind turbine tower. Containers may for example be arranged on at least two, preferably three sides of the wind turbine tower. Efficient use of the space available on the platform may thus be made.

The base of the wind turbine tower may refer to the lower part of the wind turbine tower arranged above the sea level. The base may in particular be an area of the tower close to or next to the support structure (foundation) of the wind turbine (e.g. the end of the tower at which the tower is mounted to the support structure, e.g. at a tower flange), for example close to but above the water surface. It should be clear that in some examples, the tower may also extend to below the sea level. The wind turbine may be an offshore wind turbine. The wind turbine may be supported by a support structure, such as a jacket, a monopile, a gravity-based support structure or a floating foundation. The wind turbine may further include a storage tank for storing produced gas, e.g. hydrogen tank, which may be arranged on the platform, in the support structure, in the wind turbine tower, and/or the like.

In an embodiment, the nacelle housing includes a surrounding outer wall that confines an inner volume inside the nacelle housing. The nacelle housing may in particular be formed by one cuboid or semi-ellipsoidal body. A generator of the power generation system may be arranged within the nacelle housing, or may have a separate generator housing that may be mounted to one side of the nacelle housing or that may form one face or wall of the nacelle housing. The wind turbine may comprise the electrical power generation system.

The part of the electrical power generation system may comprise at least one of a generator of the wind turbine configured to generate AC electrical power from rotation of a wind turbine rotor, a transformer, an AC-to-DC converter. Preferably, the part of the electrical power generation system arranged inside the nacelle housing comprises at least the AC-to-DC power converter which is configured to provide AC-to-DC conversion of AC electrical power received from a generator of the electrical power generation system and to provide converted DC electrical power to the electrolyzer. By arranging these components close to hydrogen production unit comprising the electrolyzer, an efficient conversion and distribution of the electrical power to electrolyzer stacks may be achieved.

The hydrogen production system may comprise at least one or a combination of: a water supply conduit configured to supply water from a water treatment unit, and in particular from a desalination unit and/or demineralization unit, of the hydrogen production system to the hydrogen production unit (electrolyzer), a hydrogen gas/liquid return conduit configured to provide a hydrogen gas/liquid mixture from the electrolyzer to a hydrogen gas/liquid separator of the hydrogen production system, a hydrogen conduit configured to guide a hydrogen gas from a hydrogen gas/liquid separator of the hydrogen production unit to the base of the wind turbine tower, and a closed loop cooling circuit having a closed loop cooling conduit configured to circulate a cooling fluid between the electrolyzer and the base of the wind turbine tower, wherein the closed loop cooling conduit is configured to cool the electrolyzer, wherein preferably, the water supply conduit, the hydrogen conduit and/or the closed loop cooling conduit extend through the wind turbine tower.

For example, the hydrogen production system comprises at least the water supply conduit and the hydrogen gas/liquid return conduit.

The hydrogen production system may further comprise an oxygen gas/liquid return conduit configured to supply a mixture of oxygen gas and water from the electrolyzer to an oxygen/liquid separator. The separated oxygen is preferably exhausted via a discharge conduit to the ambient.

The closed loop cooling circuit preferably comprises a heat exchanger configured to extract heat from the electrolyzer via the cooling fluid (i.e. cooling down the electrolyzer) and a heat exchanger configured to release the heat of the heated cooling fluid, for example a subsea heat exchanger for releasing the heat into the seawater (i.e. heated cooling fluid is cooled down).

By using the closed loop cooling circuit, the working temperature of the electrolyzer can be kept at a predetermined value. This predetermined value preferably corresponds to a value at which the electrolyzer has the highest efficiency regarding the production of hydrogen. Thus, the closed loop cooling circuit enables an increase of the efficiency of the electrolyzer.

Preferably, the wind turbine comprises an electrical power distribution system having an interface to the electrical power generation system to receive electrical power, and plural electrical connections to plural electrolyzer stacks or groups of electrolyzer stacks of the electrolyzer to provide electrical power to the plural electrolyzer stacks or groups of electrolyzer stacks of the electrolyzer. In particular, the electrical power distribution system is coupled to a generator of the electrical power generation system to receive electrical power from the generator.

Preferably, the electrical power distribution system comprises a distribution bus, in particular a bus bar, to which the plural electrical connections are coupled. By such busbar, an efficient distribution to plural electrolyzer stacks connected in parallel may be achieved. For example, the plural electrical connections may at least comprise electrical connections that connect 2, 3, 4 or more electrolyzer stacks in parallel to the distribution bus. Further parallel electrical connections may connect further electrolyzer stacks or groups of electrolyzer stacks to the distribution bus.

In some implementations, the electrical power distribution system is an electrical distribution module or board configured to distribute the received electrical power to the plural electrolyzer stacks or groups of electrolyzer stacks of the electrolyzer, wherein the electrical distribution module is preferably arranged at the top of the nacelle housing. The distribution bus and the plural electrical connections may be mounted to the electrical distribution module.

The distribution board is preferably formed as a flat element, such as a "printed circuit board". The distribution board may comprise only one electrical connection to the power generation system and plural electrical connections each connected to an electrolyzer stack or a group of electrolyzer stacks of the electrolyzer.

The distribution module being a separate element can be replaced easily and fast in case of a failure.

The distribution board may be mounted at an inner or outer top surface of the nacelle housing. When the distribution board is arranged within the nacelle housing any kind of cabling can be used.

Alternatively, the electrical power distribution system and in particular the distribution bus and the plural electrical connections are embedded into the top of the nacelle outside or inside of the nacelle housing.

The electrical power distribution system may comprise a plurality of electrical power connector parts which are arranged on an upper side of the nacelle outside of the nacelle housing and which are configured to receive complementary connector parts provided on the hydrogen production unit and electrically coupled to the plural electrolyzer stacks or groups of electrolyzer stacks of the electrolyzer. Each electrolyzer stack or group of electrolyzer stacks may for example be electrically connected to a connector part provided at the hydrogen production unit and configured to mate a corresponding connector part on top of the nacelle housing, and the electrolyzer stack or group of electrolyzer stacks, respectively, may receive electrical power via the mated connector parts.

Thus, the components of the hydrogen production unit, and in particular the plural electrolyzer stacks of the electrolyzer being mounted at the outer top of the nacelle housing can be easily electrically connected to the electrical power connector parts for receiving electrical power generated by the electrical power generation system.

The electrolyzer may comprise plural electrolyzer stacks, which may be connected electrically in different ways, for example in series (for high-voltage supply levels) or in parallel (for lower voltage supply levels).

Preferably, the electrolyzer comprises a plurality of electrolyzer stacks and/or groups of electrolyzer stacks which are electrically connected in parallel, and wherein the hydrogen production system further comprises a controller configured to control an activation and deactivation of each of the electrolyzer stacks and/or each of the groups of electrolyzer stacks of the electrolyzer.

Within each electrolyzer group, the electrolyzers can be electrically connected in parallel and/or in series.

The controller may accordingly switch on or off electrolyzer stacks or groups of electrolyzer stacks (which may be provided in form of modules). For example, respective switches may be actuated to connect or disconnect an electrolyzer stack or group of electrolyzer stacks from the power generation system. When for example an electrolyzer stack is broken or defect then only this electrolyzer can be switched off and can be replaced whereas all the other electrolyzer or groups of electrolyzer can continue working;

The electrical power distribution system may comprise a switch to activate or deactivate power supply to each of the of the electrolyzer stacks and/or each of the groups of electrolyzer stacks of the electrolyzer. Preferably the electrical power distribution system comprises one switch for each electrolyzer stack or group of electrolyzer stacks.

The controller may be configured to control the activation and deactivation in dependence on an amount of electrical power and/or a voltage level generated by the electrical power generation system, and/or wherein each electrolyzer stack or group of electrolyzer stacks comprises at least one gas sensor configured to detect a hydrogen gas quality, and wherein the controller is configured to control the activation and deactivation of the electrolyzer stacks or groups of electrolyzer stacks of the electrolyzer in dependence on a signal from the at least one gas sensor.

The controller may accordingly switch on or off electrolyzer stacks or groups of electrolyzer stacks (which may be provided in form of modules) to control the load applied to the power generation system.

The at least one gas sensor may provide an indication that an electrolyzer stack or group of electrolyzer stacks is not or not correctly working. Then this electrolyzer stack or group of electrolyzer stacks can be switched off and can be replaced or repaired. Meanwhile, the other electrolyzer stacks or groups of electrolyzer stacks do not have to be turned off. Further gas sensors may be provided in the hydrogen production unit to detect a leakage of gas produced by the hydrogen production system. The safety of the wind turbine may thereby be improved.

In particular, the power converter may be configured to control the amount of electrical power supplied to the electrolyzer. It may in particular be configured to adjust the load on the generator, in particular by adjusting generator torque. The power converter may for example be controlled by a respective converter controller, which may in turn be controlled by the above mentioned controller. Operation of the generator and of the electrolyzer within the applicable design limits may thereby be ensured.

The nacelle and in particular the nacelle housing may not comprise a DC-to-AC power converter that converts a large amount (e.g. >25%) of electric power generated by a generator of the power generation system. A small DC-to-AC converter, e.g. as part of a small AC-to-AC back-to-back converter or coupled to the output of the above-mentioned AC-to-DC converter, may be present in the nacelle in order to supply auxiliary loads of the wind turbine, such as the yaw drive, blade pitch drives, control and monitoring systems and the like; these may however only consume a relatively small fraction of the generated electric power (e.g. smaller than 200 kW or 150 kW). Further, the nacelle and in particular the nacelle housing may not comprise a low-voltage (LV) to medium-voltage (MV) or high-voltage (HV) transformer, in particular no transformer that transforms electric power from a voltage level below 2.000 V to a voltage level above 2.000 V. Accordingly, by not providing such standard conversion and transformation equipment within the nacelle, significant weight and space savings may be achieved.

The outer top of the nacelle housing (or the interior of the container in which the electrolyzer may be arranged) may comprise a support structure that provides at least two support levels arranged one on top of the other, and each support level may support at least one electrolyzer stack. A relatively large number of electrolyzer stacks may thus be arranged within a relatively small space inside the nacelle. Two, three, four or more support levels may be provided, for example in the form of respective floor racks or different floorings.

The wind turbine may further comprise an auxiliary power connection extending in the wind turbine tower for providing auxiliary electrical power from a platform of the wind turbine to one or more auxiliary components in the nacelle and/or to the hydrogen production unit, and/or for providing electrical power generated by the electrical power generation system of the wind turbine to one or more electrical consumers on a platform of the wind turbine (such as to the other components of the hydrogen production system).

Auxiliary components of the wind turbine in the nacelle and/or in the hydrogen production unit may thus be supplied either by generated electrical power or by electrical power received via the auxiliary power connection. Similarly, consumers on the platform of the wind turbine may be powered either from generated electrical power or from power received via a connection to e.g. a power grid or other power providing system separate from the wind turbine. Either one or both possibilities may be provided for feeding such auxiliary consumers or for feeding electrical consumers of the hydrogen production system.

According to a further embodiment of the invention, a method of assembling a wind turbine is provided, wherein the wind turbine comprises a nacelle arranged on a wind turbine tower and comprising an electrical power generation system, a nacelle housing of the nacelle, wherein the nacelle housing houses at least part of the electrical power generation system. The method comprises mounting a hydrogen production unit of a hydrogen production system to the top of the nacelle outside of the nacelle housing, wherein the hydrogen production unit comprises an electrolyzer configured to receive electrical power from the electrical power generation system.

By such method, a wind turbine may be assembled that has advantages corresponding to those described further above. In particular, assembly and disassembly of the hydrogen production system and the maintenance and replacement of components of the hydrogen production system is facilitated. The hydrogen production unit can be mounted at the top of the nacelle outside the nacelle housing, whereby preferably electronic connections are automatically made between the electrical connector parts arranged at the top of the nacelle housing and the complementary connector parts of the hydrogen production unit.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing showing a wind turbine according to an embodiment.
Fig. 2 is a schematic drawing showing a side view of the nacelle comprising a hydrogen production system according to an embodiment.
Fig. 3 is a schematic drawing showing the nacelle of Fig. 2 from a rear view.
Fig. 4 is a schematic drawing showing a top view of the hydrogen production system of Fig. 2.
Fig. 5 is a schematic drawing showing a side view of the hydrogen production system of Fig. 4.
Fig. 6 is a schematic drawing showing the nacelle of Fig. 2 having a distribution board according to an embodiment.
Fig. 7 is a schematic drawing showing the nacelle of Fig. 6 from a rear view.
Fig. 8 is a schematic drawing showing a top view of the distribution board of Fig. 6.

### DETAILED DESCRIPTION

In the following, embodiments and/or examples of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

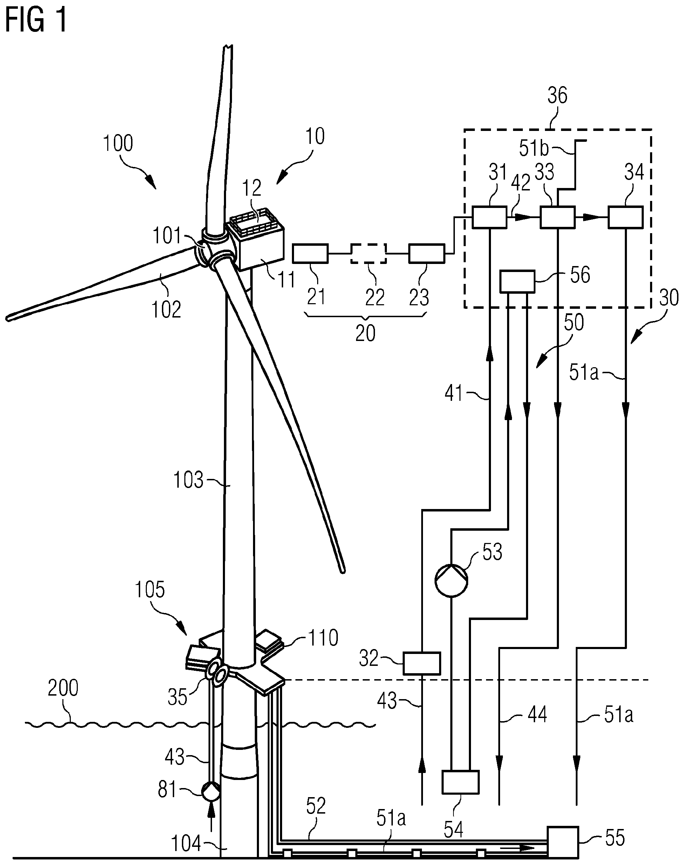

Fig. 1 schematically illustrates a wind turbine 100 comprising a nacelle 10 and a wind turbine rotor 101 with rotor blades 102. Nacelle 10 is mounted on top of a wind turbine tower 103, which is supported by a support structure (foundation) 104, which may be a bottom-fixed foundation, such as a monopile, a jacket, a gravity-based foundation, or may be a floating foundation. Wind turbine 100 further includes a platform 110 supported by foundation 104 and arranged at a base 105 of the wind turbine tower 103 above a seawater level 200. Wind turbine 100 is an offshore wind turbine and may form part of an offshore wind park comprising plural corresponding wind turbines, and optionally conventional wind turbines.

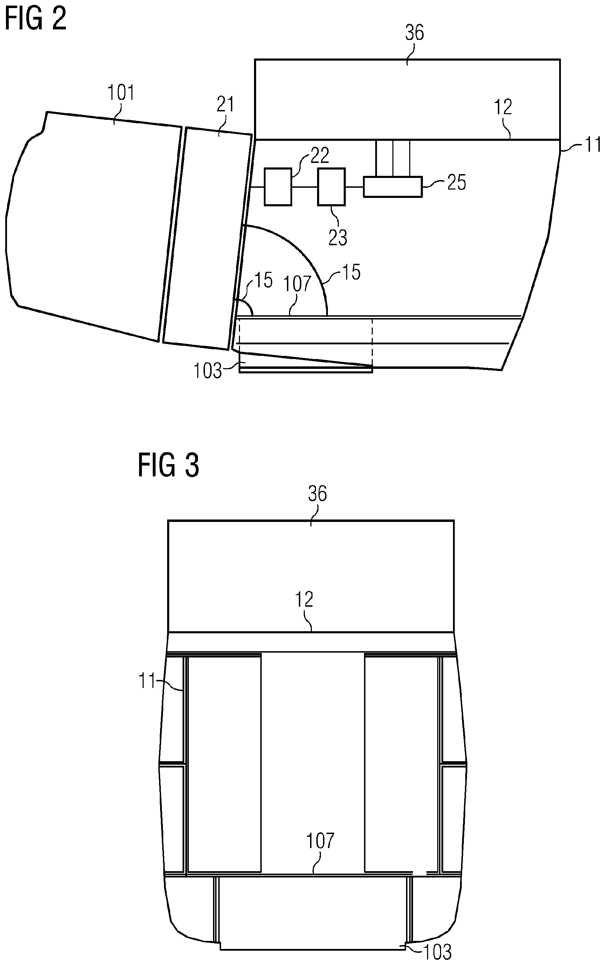

Wind turbine 100 comprises an electrical power generating system 20 that includes a generator 21, and that may further comprise an AC to DC power converter 23 and optionally a transformer 22. The wind turbine may further comprise an electrical power distribution system 25 (see Fig. 2) having an interface to the electrical power generation system 20 to receive electrical power, and plural electrical connections to plural electrolyzer stacks or groups of electrolyzer stacks of an electrolyzer to provide electrical power to the plural electrolyzer stacks or groups of electrolyzer stacks of the electrolyzer.

Wind turbine 100 further comprises a hydrogen production system 30 including a hydrogen production unit 36, wherein the hydrogen production unit 36 comprises an electrolyzer 31. At least part of the power generation system 20 is arranged and installed within a housing 11 of the nacelle 10. The hydrogen production unit 36 comprising the electrolyzer is arranged at the top 12 of the nacelle outside the nacelle housing 11 (see Figs. 2 and 3). The hydrogen production unit 36, and in particular the electrolyzer 31, is supplied with electrical power from generator 21 either directly or via the AC/DC converter 23 and/or the transformer 22, depending on the configuration. Transformer 22 is optionally provided for adjusting the voltage level to the voltage level required by electrolyzer 31, which is generally a low-voltage level below 2000 V, so that transformer 22 may be a low-voltage-to-low-voltage transformer. AC-to-DC converter 23 may be provided if such conversion is necessary and may be implemented as a passive rectifier or an actively controlled rectifier. A control system including a wind turbine controller and a converter controller (not shown) may be provided in wind turbine 100.

The hydrogen production system 30 may further comprise a water treatment system 32 which may include a desalination unit, and may further include a treatment unit that may comprise one or a combination of a purification unit, a sterilization unit, a filtration unit, a demineralization unit and the like. A water intake module 35 may be provided and via a seawater intake 43, seawater may be pumped up with a pump such as a submersible pump 81, treated, and provided as clean water via a water supply conduit 41 to the hydrogen production unit 36, for example directly to the electrolyzer 31. Using electrical power generated by power generation system 20, the electrolyzer 31 produces hydrogen gas and oxygen gas by electrolysis of the supplied clean water and provides a gas/liquid mixture via a gas/liquid return conduit 42 to a gas/liquid separator unit 33.

Reference numeral 55 indicates the gas export/import pipeline. As mentioned above, wind turbine 100 may be provided with storage facilities for storing produced gas, so that gas may also be received from other wind turbines for storage. A gas import conduit 52 may thus be provided.

The gas/liquid separator 33 is preferably comprised in the hydrogen production unit 36. Water separated from the gas may be discharged via water outlet 44 or may be provided to treatment system 32. Optionally, a compressor unit 34 may be provided as part of the hydrogen production system 30 to compress the produced hydrogen gas. The hydrogen gas may be exported via an export conduit 51a, which can for example be a pipeline leading to an onshore site or to the gas import/export pipeline. In other implementations, produced hydrogen gas may be stored in a tank, which may be located on platform 110, in tower 103, in foundation 104, or on a floating vessel. The oxygen gas may be discharged to the environment via an oxygen discharge conduit 51b.

The treatment system 32 and optionally the compressor unit 34 form part of the hydrogen production system 30 and may be located at the base of the wind turbine tower 103, in particular on the platform 110 and/or within the wind turbine tower 103. A further water purification unit, such as a filter, may be provided at the top of tower 103 or in the hydrogen production unit 36 in order to ensure the purity of the water supplied to electrolyzer 31, yet this is optional.

As part of the power generation system 20 is provided within the housing 11 and the hydrogen production unit 36 is arranged at the top 12 of the nacelle 10 outside the nacelle housing 11, large diameter electrical power cables can be provided to supply power to the electrolyzer 31, as these cables do not need to be twisted (e.g. during yawing of the nacelle) and can provide a high-current direct connection. The efficiency may thereby be improved. Further, since the wind turbine 100 exports hydrogen gas, no costly subsea cables are required for transporting the generated energy to an onshore site.

Further, the wind turbine may comprise a closed loop cooling circuit 50 having a closed loop cooling conduit which is configured to cool the electrolyzer 31. The closed loop cooling circuit 50 may comprise a heat exchanger 56 arranged at the nacelle 10 and being configured to exchange heat with the electrolyzer 31 and a heat exchanger 54 arranged at the base of the wind turbine tower, wherein a cooling fluid such as e.g. glycol, is circulated, by using a pump 53, between the heat exchangers 54, 56. The cooling fluid is guided through the heat exchanger 56 and extracts heat from the electrolyzer 31 wherein the cooling fluid is heated (i.e. the electrolyzer is cooled by the cooling fluid). The heated cooling fluid is guided through the heat exchanger 54 at the base, which may be a subsea heat exchanger arranged below the sea water level 200 for exchanging heat with the sea water or it may be an air heat exchanger, and releases the heat (i.e. heated cooling fluid is cooled down). In this way, heat generated at the electrolyzer 31 can be removed and the electrolyzer 31 can be cooled. This makes it possible to keep the operating temperature of the electrolyzer 31 at a certain value, preferably at a value at which the operating efficiency of the electrolyzer 31 is highest.

For the purpose of illustration, elements shown on the lefthand side of Fig. 1 are again schematically shown on the right-hand side of the figure; these elements designated by the same reference numerals are the same elements and they may not be present in duplicate. Rather, they are arranged within/on top of the nacelle 10 or on platform 110, as described herein.

Wind turbine 100 may be configured to provide no electrical power output to any power grid, i.e. the generated electrical power may be entirely used by electrolyzer 31 for hydrogen production, except for power required to power components of hydrogen production system 30 and/or auxiliary components of wind turbine 100. However, there may still be an auxiliary electrical connection provided to a power grid or other power source, such as a wind farm grid, to supply such components of the hydrogen production system and/or auxiliary components of the wind turbine with electrical power, for example in case of low-wind conditions or no electrical power being produced by power generation system 20. A respective auxiliary module may be provided, which may for example include a step-down transformer unit and a switch gear unit (not shown). It should be clear that Fig. 1 does not illustrate all components that can be comprised in the wind turbine 100, and in particular in the hydrogen production system 30, but further components may be present as described further below.

As wind turbine 100 may be configured to not export electrical power, the nacelle 10 may not comprise any respective DC-to-AC converter (which conventionally forms part of a back-to-back converter to provide the required AC frequency of the grid into which the power is fed) and may further not comprise a respective step-up transformer that provides the voltage level of either the collector grid into which the power is fed or of the power grid, which is typically above 2000 V, in particular above 10.000 V. Space and weight may thus be saved in nacelle 10, so that the size of nacelle 10 may be maintained even though electrolyzer 31, which can include plural stacks, is arranged inside nacelle 10.

Auxiliary components of wind turbine 100 may for example comprise a wind turbine controller, a yaw drive, pitch drives, lights, service equipment such as cranes or lifts, communication equipment, cooling equipment and/or the like. Such auxiliary components of the wind turbine may accordingly be supplied with electric power via power generation system 20 and/or via an auxiliary module (not shown). Additionally or alternatively, wind turbine 100 may include a backup storage, which may include a fuel cell that may convert produced hydrogen into electrical energy, or a battery storage system, such as a backup UPS (uninterruptable power supply).

Hydrogen export conduit 51a may for example lead into a gas grid, e.g. a gas collection system of the wind farm. Platform 110 may be located close to or at a tower flange of wind turbine tower 103.

As shown in Fig. 2, the wind turbine tower 103 may include an upper opening 107, and a generator support frame 15 may be provided for supporting the generator 21 against wind turbine tower 103. The generator support frame extends in a first direction away from the upper opening 107 (to the left side in Fig. 1) where the generator 21 is mounted.

As shown in Figs. 2 and 3, the hydrogen production unit 36 is arranged at the top 12 of the nacelle 10 outside the nacelle housing 11. The hydrogen production unit 36 may comprise a frame structure, a housing or a platform wherein all components of the hydrogen production unit 36 are mounted on the frame structure, in the housing or on the platform. In particular, the frame structure or the housing may form or comprise a closed container in which the components of the hydrogen production unit 36 are arranged. The hydrogen production unit 36 is preferably removably mounted to the outer top 12 of the nacelle housing 11. Thus, assembly and disassembly of the hydrogen production unit as a module is easy by using a crane or a helicopter.

The nacelle housing 11 may in particular be one single housing that houses at least part, or all of the power generation system 20. If provided, the transformer 22 and/or the power converter 23, and preferably the electrical power distribution system are comprised within the same nacelle housing 11.

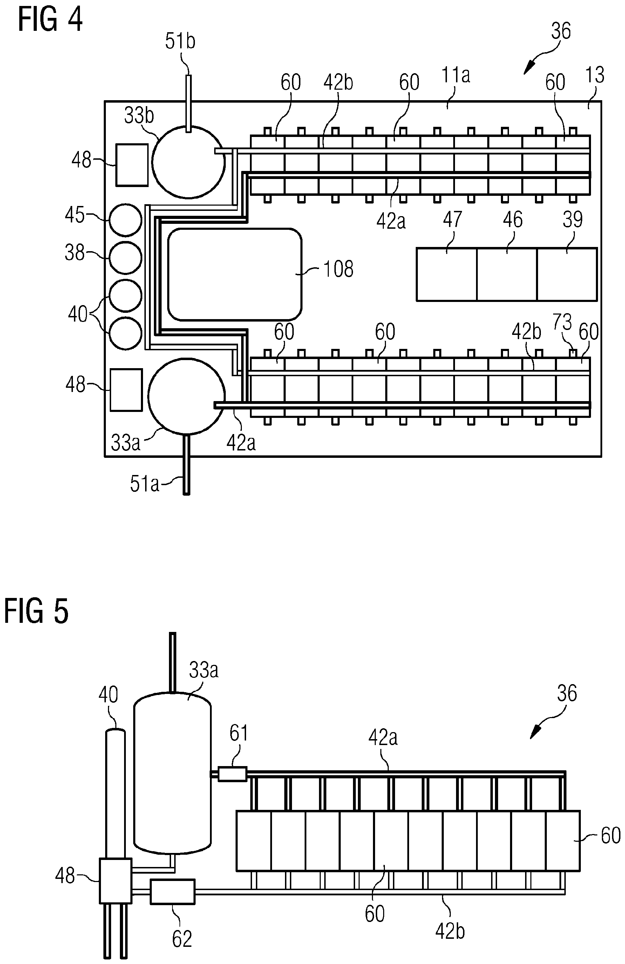

Further, as shown in Figs. 4 and 5, the electrolyzer 31 of the hydrogen production unit 36 may comprise one or more electrolyzer stacks 60. The electrolyzer stacks 60 may be connected electrically in series, or they may be connected in parallel. The type of connection can be chosen in accordance with the output voltage level of the power generation system 20 and the input voltage level of the electrolyzer stacks. By an appropriate configuration, no transformer 22 may be required.

The separator 33 may comprise a hydrogen/liquid separator 33a configured to receive and to separate a hydrogen/liquid mixture from the electrolyzer 31, and an oxygen/liquid separator 33b configured to receive and to separate an oxygen/liquid mixture from the electrolyzer 31. In particular, by using a pump 61, the hydrogen/liquid mixture exiting the electrolyzer 31 is guided along a hydrogen/liquid return conduit 42a to the hydrogen/liquid separator 33a and the separated hydrogen exiting the hydrogen/liquid separator 33a is guided along the hydrogen gas export conduit 51a. The oxygen/liquid mixture exiting the electrolyzer 31 is guided along an oxygen/liquid return conduit 42b by using a pump 62 to the oxygen/liquid separator 33b and the oxygen exiting the oxygen/liquid separator 33b is preferably discharged via the oxygen discharge conduit 51b.

In addition to the electrolyzer 31 and/or the separator unit 33, the hydrogen production unit 36 may comprise at least one or a combination of the following components: water tank(s) 40 configured to store water, in particular desalinated and/or demineralized water received from the water treatment unit 32, and to supply the stored water to the electrolyzer 31 for operating the electrolyzer, ion exchanger(s) 45 configured to filter ions of water before the water being supplied to the electrolyzer 31, a gas dryer unit 38 configured to dry a hydrogen output from the electrolyzer 31, heat exchanger(s) 48 configured to remove the heat generated during operation of the hydrogen production unit 36, a power storage unit 47 configured to store power for operating the hydrogen production unit 36, a cooling unit 39 configured to cool one or more components of the hydrogen production unit 36, and a nitrogen generator 46 configured to generate nitrogen gas from the ambient air and to purge one or more components of the hydrogen production unit 36 with the generated nitrogen gas.

Preferably all the other components of the hydrogen production system 30 which are not arranged at the top 12 of the nacelle housing are arranged at the base 105 of the wind turbine tower 103, more specifically on the platform 110, or within the wind turbine tower 103.

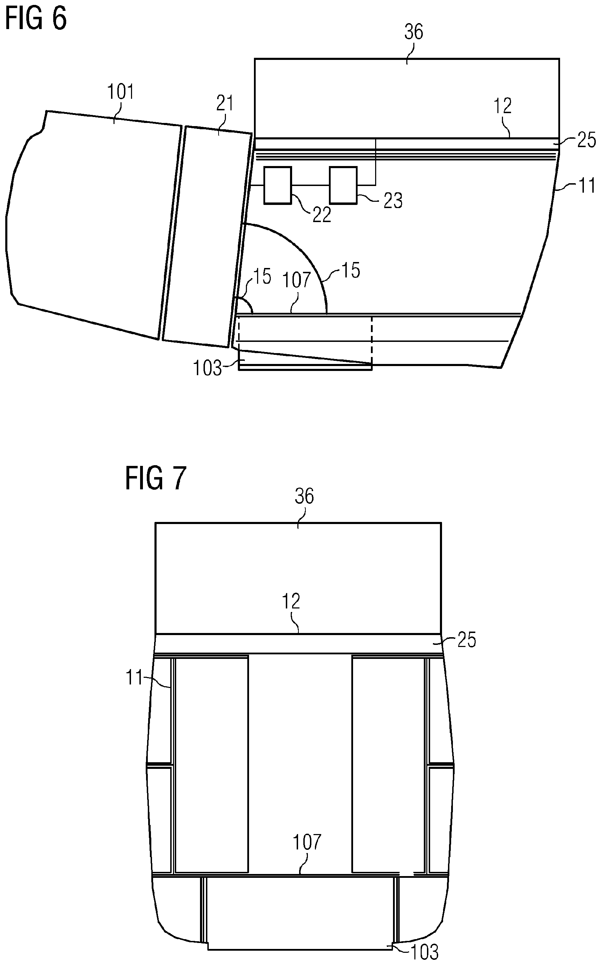

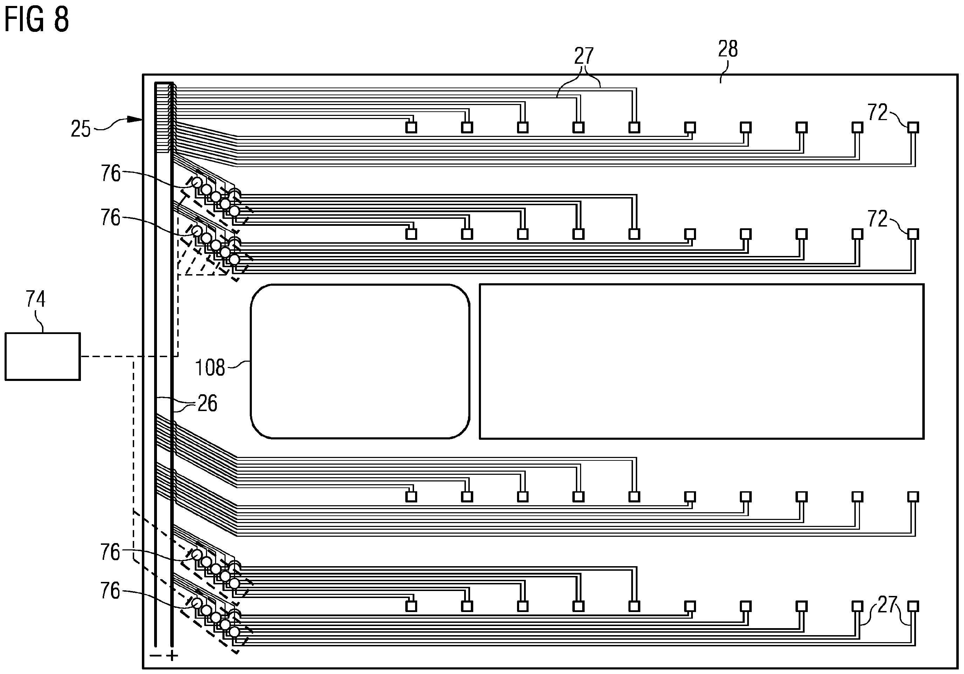

As shown in Figs. 6 and 7, the electrical distribution system 25 is an electrical distribution module (board)26 (see Fig. 8) configured to distribute the received electrical power to the electrolyzer 31, wherein the electrical distribution module is arranged at the top 12 of nacelle 10 inside the nacelle housing 11. Alternatively, the electrical distribution system 25 is arranged at the top of the nacelle 10 outside of the nacelle housing 11.

As shown in Figs. 6 and 8, the electrical power distribution system 25 at the top of the nacelle housing has an interface to the electrical power generation system 20 to receive electrical power, and has plural electrical connections 27 to plural electrolyzer stacks or groups of electrolyzer stacks 60 of the electrolyzer 31 to provide electrical power to the plural electrolyzer stacks or groups of electrolyzer stacks of the electrolyzer 31. The electrical power distribution system 25 may comprise a distribution bus 26, in particular a bus bar, to which the plural electrical connections 27 are coupled. The distribution bus 26 and the plural electrical connections 27 may be mounted to the electrical distribution module 28. The electrical distribution module 28 may be formed as a flat plate element. Alternatively, the distribution bus 26 and the plural electrical connections 27 may be embedded at the top of the nacelle housing 11.

The plural electrical connections 27 may be connected to a plurality of electrical power connector parts 72 which may be arranged on the outer top 12 of the nacelle housing 11 and which are configured to receive complementary connector parts 73 provided on the hydrogen production unit 36 and electrically coupled to the plural electrolyzer stacks 60 or groups of electrolyzer stacks of the electrolyzer.

Further, the hydrogen production system 30 may comprise a controller 74 configured to control an activation and deactivation of each of the electrolyzer stacks and/or each of the groups of electrolyzer stacks of the electrolyzer 31. Preferably each of the plural electrical connections 27 comprise a switch to activate or deactivate power supply to each of the of the electrolyzer stacks and/or each of the groups of electrolyzer stacks of the electrolyzer which is connected to the respective electrical connections 27. The controller 74 my form part of or may be connected to the wind turbine controller and may control the activation/deactivation of individual electrolyzer stacks based on one or more operating parameters of the wind turbine, such as the power output, output voltage or current, and/or hydrogen quality.

As shown in Fig. 8, the top 12 of the nacelle housing may comprise an upper opening 108. The hydrogen production unit 36 may comprise also an opening at the bottom of the unit 36 which is preferably at least partially coincident with the upper opening 108 of the nacelle housing. Thus, for example components can be transported between the hydrogen production unit 36 and the nacelle housing.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A wind turbine (100), comprising:
- a nacelle (10) arranged on a wind turbine tower (103) and comprising an electrical power generation system (20) ;
- a nacelle housing (11) of the nacelle, wherein the nacelle housing (11) houses at least part of the electrical power generation system (20); and
- a hydrogen production system (30) including a hydrogen production unit (36),
wherein the hydrogen production unit (36) comprises an electrolyzer (31) configured to receive electrical power from the electrical power generation system (20), and wherein the hydrogen production unit (36) is mounted to a top of the nacelle (10) outside of the nacelle housing (11).

2. The wind turbine according to claim 1, wherein the hydrogen production unit (36) further comprises one or more of the following components:
- a water tank (40) configured to store water, in particular desalinated and/or demineralized water received from a water treatment unit (32), and to supply the stored water to the electrolyzer (31) for operating the electrolyzer,
- an ion exchanger (45) configured to filter ions of water before the water being supplied to the electrolyzer (31),
- a gas/liquid separator unit (33) configured to receive and separate a gas/liquid output from the electrolyzer (31), in particular a hydrogen separator (33a) configured to receive a hydrogen/water output from the electrolyzer (31) and an oxygen separator (33b) configured to receive an oxygen/water output from the electrolyzer (31),
- a gas dryer unit (38) configured to dry a hydrogen output from the electrolyzer,
- a heat exchanger (48) configured to remove heat generated during operation of the hydrogen production unit (36),
- a power storage unit (47) configured to store electrical power for operating the hydrogen production unit (36),
- a cooling unit (39) configured to cool one or more components of the hydrogen production unit (36), and
- a nitrogen generator (46) configured to generate nitrogen gas from the ambient air and to purge one or more components of the hydrogen production unit (36) with the generated nitrogen gas.

3. The wind turbine according to claim 1 or 2, wherein the hydrogen production unit (36) comprises a frame structure, a housing, or a platform, and wherein the one or more components of the hydrogen production unit are mounted on the frame structure, in the housing, or on the platform.

4. The wind turbine according to claim 1, 2 or 3, wherein the hydrogen production unit (36) is removably mounted to the top of the nacelle (10).

5. The wind turbine according to any of the preceding claims, wherein one or more other components of the hydrogen production system (30) are arranged at a base (105) of the wind turbine tower and/or within the wind turbine tower (103), and
wherein preferably, the one or more other components include at least one or a combination of:
- a water treatment unit (32) having a desalination unit configured to desalinate seawater and to provide desalinated water to the hydrogen production unit (36) and/or a demineralization unit configured to demineralize water and to provide demineralized water to the hydrogen production unit (36),
- a pump arrangement (81) configured to pump water from the base of the wind turbine tower to the hydrogen production unit (36),
- a cooling pump arrangement (53) configured to circulate a cooling fluid between the base (195) of the wind turbine tower and the hydrogen production unit (36),
- a compressor unit (34) configured to compress hydrogen gas produced by the hydrogen production unit, and
- electrical power and control equipment of said hydrogen production system (30).

6. The wind turbine according to claim 5, wherein the wind turbine further includes a platform (110) arranged at a base (105) of the wind turbine tower, and wherein one or more of the other components of the hydrogen production system (30) are arranged on said platform (110).

7. The wind turbine according to any of the preceding claims, wherein the hydrogen production system (30) comprises at least one or a combination of:
- a water supply conduit (41, 43) configured to supply water from a water treatment unit (32), and in particular from a desalination unit and/or demineralization unit, of the hydrogen production system to the hydrogen production unit (36),
- a hydrogen gas/liquid return conduit (42) configured to provide a hydrogen gas/liquid mixture from the electrolyzer (31) to a hydrogen gas/liquid separator (33, 33a) of the hydrogen production system,
- a hydrogen conduit (51a) configured to guide hydrogen gas from a hydrogen gas/liquid separator (33, 33a) of the hydrogen production unit (36) to the base (105) of the wind turbine tower, and
- a closed loop cooling conduit of a closed loop cooling circuit (50) configured to circulate a cooling fluid between the electrolyzer (31) and the base (105) of the wind turbine tower, wherein the closed loop cooling circuit (50) is configured to cool the electrolyzer (31),
wherein preferably, the water supply conduit (41, 43), the hydrogen conduit (51a) and/or the closed loop cooling conduit of the closed loop cooling circuit (50) extend through the wind turbine tower (103).

8. The wind turbine according to any of the preceding claims, wherein said part of the electrical power generation system (20) comprises a generator (21) of the wind turbine configured to generate electrical power from rotation of a wind turbine rotor (101), and/or an AC to DC power converter (23) configured to supply DC electrical power to the hydrogen production unit (36) and in particular to the electrolyzer (31) .

9. The wind turbine according to any of the preceding claims, wherein the wind turbine comprises an electrical power distribution system (25) having an interface to the electrical power generation system (20) to receive electrical power, and plural electrical connections (27) to plural electrolyzer stacks (60) or groups of electrolyzer stacks of the electrolyzer to provide electrical power to the plural electrolyzer stacks or groups of electrolyzer stacks of the electrolyzer,
wherein preferably, the electrical power distribution system (25) comprises a distribution bus (26), in particular a bus bar, to which the plural electrical connections (27) are coupled.

10. The wind turbine according to claim 9, wherein the electrical power distribution system (20) is an electrical distribution module (28) configured to distribute the received electrical power to the plural electrolyzer stacks (60) or groups of electrolyzer stacks of the electrolyzer, wherein the electrical distribution module (28) is arranged at the top (12) of the nacelle housing (11), and
wherein preferably, the distribution bus (26) and the plural electrical connections (27) are mounted to the electrical distribution module (28).

11. The wind turbine according to claim 9 or 10, wherein the electrical power distribution system (25) comprises a plurality of electrical power connector parts (72) which are arranged on an upper side (12) of the nacelle outside the nacelle housing and which are configured to receive complementary connector parts (73) provided on the hydrogen production unit and electrically coupled to the plural electrolyzer stacks or groups of electrolyzer stacks of the electrolyzer.

12. The wind turbine according to any of claims 9 to 11, wherein the electrical power distribution system (25) comprises at least one switch (76) to activate or deactivate power supply to each of the electrolyzer stacks (60) and/or to each of the groups of electrolyzer stacks of the electrolyzer.

13. The wind turbine according to any of the preceding claims, wherein the electrolyzer (31) comprises a plurality of electrolyzer stacks (60) and/or groups of electrolyzer stacks which are electrically connected in parallel, and
wherein the hydrogen production system (30) further comprises a controller (74) configured to control an activation and deactivation of each of the electrolyzer stacks (60) and/or each of the groups of electrolyzer stacks of the electrolyzer.

14. The wind turbine according to claim 13, wherein the controller (74) is configured to control the activation and deactivation in dependence on an amount of electrical power and/or a voltage level generated by the electrical power generation system (20), and/or
wherein each electrolyzer stack (60) or group of electrolyzer stacks comprises at least one gas sensor configured to detect a hydrogen gas quality, and wherein the controller (74) is configured to control the activation and deactivation of the electrolyzer stacks (60) or groups of electrolyzer stacks of the electrolyzer in dependence on a signal from the at least one gas sensor.

15. A method of assembling a wind turbine, wherein the wind turbine comprises a nacelle (10) arranged on a wind turbine tower (103) and comprising an electrical power generation system (20), and a nacelle housing (11) of the nacelle, wherein the nacelle housing (11) houses at least part of the electrical power generation system (20), wherein the method comprises:
- mounting a hydrogen production unit of a hydrogen production system to the top of the nacelle outside of the nacelle housing, wherein the hydrogen production unit (36) comprises an electrolyzer (31) configured to receive electrical power from the electrical power generation system (20).
